# EUROPÄISCHE PATENTSCHRIFT

(11) **EP 3 697 457 B1**
(45) Veröffentlichungstag und Bekanntmachung des Hinweises auf die Patenterteilung: **07.07.2021**
(21) Anmeldenummer: 18780163.4
(22) Anmeldetag: 09.10.2018
(51) Int. Cl.: A61L 15/60, C08F 220/06, C08F 6/28

(54) **VERFAHREN ZUR HERSTELLUNG VON SUPERABSORBERN**
METHOD FOR THE PRODUCTION OF SUPERABSORBERS
PROCÉDÉ DE PRODUCTION DE SUPERABSORBANTS

(30) Priorität: 18.10.2017 EP 17196957
(43) Veröffentlichungstag der Anmeldung: 26.08.2020
(73) Patentinhaber: BASF SE, 67056 Ludwigshafen am Rhein (DE)
(72) Erfinder: STEPHAN, Oskar, 67056 Ludwigshafen (DE); GRUENEWALD, Gerald, 67056 Ludwigshafen (DE); WEISMANTEL, Matthias, 67056 Ludwigshafen (DE); POSSEMIERS, Karl, 2040 Antwerpen (BE); PETERSON, Monte, Freeport Texas 77541 (US); FUNK, Ruediger, 67056 Ludwigshafen (DE); BERTHA, Sylvia, 67056 Ludwigshafen (DE); CATTERNAN, Tom, Geismar Louisiana 70734 (US)
(74) Vertreter: BASF IP Association
(86) Internationale Anmeldenummer: PCT/EP2018/077455
(87) Internationale Veröffentlichungsnummer: WO 2019/076682

(56) Entgegenhaltungen:
- WO-A1-2012/152647
- WO-A2-2010/066680
- WO-A2-2010/094639

## Beschreibung

Die vorliegende Erfindung betrifft ein Verfahren zur Herstellung von Superabsorbern, umfassend die Schritte i) Klassierung der Superabsorberpartikel mittels eines oder mehrerer Siebe und ii) Entfernung metallischer Verunreinigungen mittels eines oder mehrerer Magnetabscheider, wobei zur Klassierung Siebe aus einem Drahtgewebe eingesetzt werden, die Drähte des Drahtgewebes aus einem Stahl aus mindestens 70 Gew.-% Eisen, mindestens 10 Gew.-% Chrom und weniger als 2,5 Gew.-% Nickel bestehen und der Durchsatz an Superabsorberpartikeln im Magnetabscheider im Bereich von 2,0 bis 6,5 g/s pro cm² freier Querschnittsfläche beträgt.

Superabsorber werden zur Herstellung von Windeln, Tampons, Damenbinden und anderen Hygieneartikeln, aber auch als wasserzurückhaltende Mittel im landwirtschaftlichen Gartenbau verwendet. Die Superabsorber werden auch als wasserabsorbierende Polymere bezeichnet.

Die Herstellung von Superabsorbern wird in der Monographie "Modern Superabsorbent Polymer Technology", F.L. Buchholz und A.T. Graham, Wiley-VCH, 1998, Seiten 71 bis 103, beschrieben.

Die Eigenschaften der Superabsorber können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm² (AUL0.3psi) durchläuft ein Maximum.

Zur Verbesserung der Anwendungseigenschaften, wie beispielsweise Gelbettpermeabilität (GBP) und Absorption unter einem Druck von 49,2 g/cm² (AUL0.7psi), werden Superabsorberpartikel im allgemeinen oberflächennachvernetzt. Dadurch steigt der Vernetzungsgrad der Partikeloberfläche, wodurch die Absorption unter einem Druck von 49,2 g/cm² (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der Polymerpartikel kovalente Bindungen bilden können.

EP 1 422 257 A1 und WO 2010/066680 A2 offenbaren die Verwendung von Magnetabscheidern bei der Herstellung von Superabsorbern.

Aufgabe der vorliegenden Erfindung war die Bereitstellung eines verbesserten Verfahrens zur Herstellung von Superabsorbern, insbersondere eine Verbesserung der Abtrennung metallischer Verunreinigungen.

Gelöst wurde die Aufgabe durch ein Verfahren zur Herstellung von Superabsorbern durch Polymerisation einer Monomerlösung oder-suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend die Schritte
i) Klassierung der Superabsorberpartikel mittels eines oder mehrerer Siebe und
ii) Entfernung metallischer Verunreinigungen mittels eines oder mehrerer Magnetabscheider,
wobei Schritt i) vor Schritt ii) durchgeführt wird, dadurch gekennzeichnet, dass zur Klassierung Siebe aus einem Drahtgewebe eingesetzt werden, die Drähte des Drahtgewebes aus einem Stahl aus mindestens 70 Gew.-% Eisen, mindestens 10 Gew.-% Chrom und weniger als 2,5 Gew.-% Nickel bestehen und der Durchsatz an Superabsorberpartikeln im Magnetabscheider im Bereich von 2,0 bis 6,5 g/s pro cm² freier Querschnittsfläche beträgt.

Die Drähte des Drahtgewebes bestehen vorzugsweise zu mindestens 75 Gew.-%, besonders bevorzugt zu mindestens 78 Gew.-%, ganz besonders bevorzugt zu mindestens 80 Gew.-%, aus Eisen.

Die Drähte des Drahtgewebes bestehen vorzugsweise zu mindestens 12 Gew.-%, besonders bevorzugt zu mindestens 14 Gew.-%, ganz besonders bevorzugt zu mindestens 16 Gew.-%, aus Chrom.

Die Drähte des Drahtgewebes bestehen vorzugsweise zu weniger als 1,0 Gew.-%, besonders bevorzugt zu weniger als 0,5 Gew.-%, ganz besonders bevorzugt zu weniger als 0,1 Gew.-%, aus Nickel.

Geeignete Stähle für die Drähte des Drahtgewebes sind Stähle mit der Werkstoffnummer 1.40xx gemäß der DIN EN 10088-3, wobei xx eine natürliche Zahl von 0 bis 99 sein kann.

Der Durchsatz an Superabsorberpartikeln im Magnetabscheider beträgt vorzugsweise von 2,5 bis 6,0 g/s pro cm² freier Querschnittsfläche, besonders bevorzugt 3,0 bis 5,5 g/s pro cm² freier Querschnittsfläche, ganz besonders bevorzugt von 3,5 bis 5,0 g/s pro cm² freier Querschnittsfläche.

In einer bevorzugten Ausführungsform der vorliegenden Erfindung werden handelsübliche Magnetstäbe eingesetzt. Die magnetische Flussdichte beträgt vorzugsweise mindestens 0,6 T, besonders bevorzugt miondestens 0,9 T, ganz besonders bevorzugt mindestens 1,1 T. Die Magnetstäbe werden üblicherweise als parallele Gitter angeordnet.

Der Durchmesser der Magnetstäbe beträgt vorzugsweise von 15 bis 45 mm, besonders bevorzugt von 20 bis 35 mm, ganz besonders bevorzugt von 25 bis 30 mm.

Die Länge der Magnetstäbe beträgt vorzugsweise von 200 bis 450 mm, besonders bevorzugt von 250 bis 400 mm, ganz besonders bevorzugt von 300 bis 350 mm.

Der horizontale Abstand zwischen den Magnetstäben beträgt vorzugsweise von 10 bis 35 mm, besonders bevorzugt von 15 bis 30 mm, ganz besonders bevorzugt von 20 bis 25 mm.

Der vertikale Abstand zwischen den Magnetstäben beträgt vorzugsweise von 30 bis 75 mm, besonders bevorzugt von 40 bis 65 mm, ganz besonders bevorzugt von 50 bis 55 mm.

Die freie Querschnittsfläche berechnet sich als die niedrigste freie Fläche senkrecht zur Produktstromrichtung im Bereich der Magnete. Bei einer parallelen Anordung von Magnetstäben ist dies der Querschnitt des Magnetabscheiders abzüglich der Fläche, die sich aus Anzahl, Länge und Durchmesser der Magnetstäbe ergibt. Werden mehrere Gitter von Magnetstäben übereinander angeordnet, so wird die niedrigste freie Querschnittsfläche zur Berechnung verwendet. Üblicherweise ist dies das Gitter mit der größten Anzahl von Magnetstäben.

Der vorliegenden Erfindung liegt die Erkenntnis zugrunde, dass sich Drahtsücke aus den verwendeten Sieben lösen können und diese Drahtstücke sich bei hohen Durchsätzen besser abtrennen lassen. Die erfindungsgemäß einzusetzenden Drähte weisen auch eine hohe Korrosionsbeständigkeit auf.

Die Superabsorberpartikel weisen bei der Klassierung und/oder im Magnetabscheider eine Temperatur von vorzugsweise 40 bis 90°C, besonders bevorzugt von 50 bis 80°C, ganz besonders bevorzugt von 55 bis 75°C, auf.

Die Superabsorberpartikel weisen bei der Klassierung und/oder im Magnetabscheider einen Feuchtegehalt von vorzugsweise 1 bis 20 Gew.-%, besonders bevorzugt von 2 bis 10 Gew.-%, ganz besonders bevorzugt von 2,5 bis 5 Gew.-%, auf.

Vorteilhaft ist Schritt i) die letzte Klassierung im Verfahren, üblicherweise ist dies die Klassierung nach der Oberflächennachvernetzung. Wird nach der Oberflächennachvernetzung noch beschichtet und/oder nachbefeuchtet, so ist dies die Klassierung nach dieser Beschichtung oder Nachbefeuchtung.

Im Folgenden wird die Herstellung der Superabsorber näher erläutert:
Die Superabsorber werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 02/055469 A1, der WO 03/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomers a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 03/104299 A1, WO 03/104300 A1, WO 03/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 02/032962 A2 beschrieben.

Bevorzugte Vernetzer b) sind Pentaerythrittriallylether, Tetraallyloxyethan, Methylenbismethacrylamid, 15-fach ethoxyliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Dioder Triacrylaten veresterten mehrfach ethoxylierten und/oder propoxylierten Glyzerine, wie sie beispielsweise in WO 03/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,25 bis 1,5 Gew.-%, besonders bevorzugt 0,3 bis 1,2 Gew.-%, ganz besonders bevorzugt 0,4 bis 0,8 Gew.-%, jeweils berechnet auf die Gesamtmenge an eingesetztem Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird vorzugsweise das Dinatriumsalz der 2-Hydroxy-2-sulfonatoessigsäure oder ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; Deutschland) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.%, ganz besonders bevorzugt von 50 bis 65 Gew.-%. Es ist auch möglich Monomersuspensionen, d.h. Monomerlösungen mit die Löslichkeit überschreitendem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren für die Polymerisation sind beispielsweise Knetreaktoren oder Bandreaktoren. Im Kneter wird das bei der Polymerisation einer wässrigen Monomerlösung oder-suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das zerkleinert werden muss, beispielsweise in einem Extruder oder Kneter.

Zur Verbesserung der Trocknungseigenschaften kann das mittels eines Kneters erhaltene zerkleinerte Polymergel zusätzlich extrudiert werden.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 85 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen. Feste Carbonate und Hydrogencarbonate können hierbei auch in verkapselter Form eingesetzt werden, vorzugsweise in die Monomerlösung direkt vor der Polymerisation, während oder nach der Polymerisation ins Polymergel und vor dessen Trocknung. Die Verkapselung erfolgt durch Beschichtung der Oberfläche mit einem unlöslichen oder nur langsam löslichen Material (beispielsweise mittels filmbildender Polymere, inerter anorganischer Materialien oder schmelzbaren organischer Materialien), welches die Lösung und Reaktion des festen Carbonats oder Hydrogencarbonats so verzögert, dass erst während der Trocknung Kohlendioxid freigesetzt wird und der entstehende Superabsorber eine hohe innere Porosität aufweist.

Optional kann zur Monomerlösung vor oder während der Polymerisation ein Tensid zugegeben werden und die Monomerlösung dann vor oder während der Polymerisation mit einem Inertgas oder Wasserdampf oder durch starkes Rühren geschäumt werden. Das Tensid kann anionisch, kationisch, zwitterionisch oder auch nicht-ionisch sein. Bevorzugt wird ein hautfreundliches Tensid eingesetzt.

Das Polymergel wird dann in üblicherweise mit einem Umluftbandtrockner getrocknet bis der Restfeuchtegehalt vorzugsweise 0,5 bis 10 Gew.-%, besonders bevorzugt 1 bis 6 Gew.-%, ganz besonders bevorzugt 1,5 bis 4 Gew.-%, beträgt, wobei der Restfeuchtegehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Polymergels beträgt vor der Trocknung vorzugsweise von 25 und 90 Gew.-%, besonders bevorzugt von 35 bis 70 Gew.-%, ganz besonders bevorzugt von 40 bis 60 Gew.-%. Anschließend wird das getrocknete Polymergel gebrochen und optional grob zerkleinert.

Das getrocknete Polymergel wird hiernach üblicherweise gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können. Die mittlere Partikelgröße der als Produktfraktion abgetrennten Polymerpartikel beträgt vorzugsweise von 150 bis 850 µm, besonders bevorzugt von 250 bis 600 µm, ganz besonders von 300 bis 500 µm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Polymerpartikeln mit einer Partikelgröße von größer 150 µm beträgt vorzugsweise mindestens 90 Gew.-%, besonders bevorzugt mindestens 95 Gew.-%, ganz besonders bevorzugt mindestens 98 Gew.-%.

Polymerpartikel mit zu niedriger Partikelgröße senken die Gelbettpermeabilität (GBP). Daher sollte der Anteil zu kleiner Polymerpartikel ("fines") niedrig sein.

Zu kleine Polymerpartikel werden daher üblicherweise abgetrennt und in das Verfahren rückgeführt, vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt. Es ist aber auch möglich die zu kleinen Polymerpartikel in einem dem Polymerisationsreaktor nachgeschalteten Kneter oder Extruder in das Polymergel einzuarbeiten.

Werden die zu kleinen Polymerpartikel sehr früh zugesetzt, beispielsweise bereits zur Monomerlösung, so wird dadurch die Zentrifugenretentionskapazität (CRC) der erhaltenen Polymerpartikel gesenkt. Dies kann aber beispielsweise durch Anpassung der Einsatzmenge an Vernetzer b) kompensiert werden.

Der Anteil an Polymerpartikeln mit einer Partikelgröße von höchstens 850 µm, beträgt vorzugsweise mindestens 90 Gew.-%, besonders bevorzugt mindestens 95 Gew.-%, ganz besonders bevorzugt mindestens 98 Gew.-%.

Der Anteil an Polymerpartikeln mit einer Partikelgröße von höchstens 600 µm, beträgt vorzugsweise mindestens 90 Gew.-%, besonders bevorzugt mindestens 95 Gew.-%, ganz besonders bevorzugt mindestens 98 Gew.-%.

Polymerpartikel mit zu großer Partikelgröße senken die Quellgeschwindigkeit. Daher sollte der Anteil zu großer Polymerpartikel ebenfalls niedrig sein. Zu große Polymerpartikel werden daher üblicherweise abgetrennt und in die Mahlung rückgeführt.

Die Polymerpartikel können zur weiteren Verbesserung der Eigenschaften thermisch oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des Weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 03/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 3 Gew.-%, besonders bevorzugt 0,02 bis 1 Gew.-%, ganz besonders bevorzugt 0,05 bis 0,2 Gew.-%, jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel oberflächennachvernetzt und getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; Deutschland), Vrieco-Nauta Continuous Mixer (Hosokawa Micron BV; Doetinchem; Niederlande), Processall Mixmill Mixer (Processall Incorporated; Cincinnati; USA) und Schugi Flexomix® (Hosokawa Micron BV; Doetinchem; Niederlande). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die Oberflächennachvernetzung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; Deutschland), Hosokawa Bepex® Disc Dryer (Hosokawa Micron GmbH; Leingarten; Deutschland), Holo-Flite® dryers (Metso Minerals Industries Inc.; Danville; USA) und Nara Paddle Dryer (NARA Machinery Europe; Frechen; Deutschland). Überdies können auch Wirbelschichttrockner eingesetzt werden.

Die Oberflächennachvernetzung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und thermisch oberflächennachvernetzt.

Bevorzugte Reaktionstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur beträgt vorzugsweise mindestens 10 Minuten, besonders bevorzugt mindestens 20 Minuten, ganz besonders bevorzugt mindestens 30 Minuten, und üblicherweise höchstens 60 Minuten.

In einer bevorzugten Ausführungsform der vorliegenden Erfindung werden die Polymerpartikel nach der Oberflächennachvernetzung gekühlt. Die Kühlung wird vorzugsweise in Kontaktkühlern, besonders bevorzugt Schaufelkühlern, ganz besonders bevorzugt Scheibenkühlern, durchgeführt. Geeignete Kühler sind beispielsweise Hosokawa Bepex® Horizontal Paddle Cooler (Hosokawa Micron GmbH; Leingarten; Deutschland), Hosokawa Bepex® Disc Cooler (Hosokawa Micron GmbH; Leingarten; Deutschland), Holo-Flite® coolers (Metso Minerals Industries Inc.; Danville; USA) und Nara Paddle Cooler (NARA Machinery Europe; Frechen; Deutschland). Überdies können auch Wirbelschichtkühler eingesetzt werden.

Im Kühler werden die Polymerpartikel auf vorzugsweise 40 bis 90°C, besonders bevorzugt 45 bis 80°C, ganz besonders bevorzugt 50 bis 70°C, abgekühlt.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 40 bis 120°C, besonders bevorzugt bei 50 bis 110°C, ganz besonders bevorzugt bei 60 bis 100°C, durchgeführt. Bei zu niedrigen Temperaturen neigen die Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert. Vorteilhaft wird die Nachbefeuchtung im Kühler nach der thermischen Oberflächennachvernetzung durchgeführt.

Geeignete Beschichtungen zur Verbesserung der Quellgeschwindigkeit sowie der Gelbettpermeabilität (GBP) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20. Geeignete Beschichtungen zur Staubbindung, zur Verringerung der Verbackungsneigung sowie zur Erhöhung der mechanischen Stabilität sind Polymerdispersionen, wie in EP 0 703 265 B1 beschrieben, und Wachse, wie in US 5 840 321 beschrieben.

Anschließend können die beschichteten und/oder nachbefeuchteten Polymerpartikel erneut klassiert werden, wobei zu kleine und/oder zu große Polymerpartikel abgetrennt und in das Verfahren rückgeführt werden.

### Beispiele

Für die Versuche wurde ein handelsüblicher oberflächennachvernetzter Superabsorber eingesetzt. Zur Simulation von Siebschäden wurden Drahtstücke mit einer Länge von 20 mm und einem Durchmesser von 0,22 mm verwendet. Es wurde 1 Drahtstück pro 12000 kg Superabsorber zugesetzt.

Der Magnetabscheider bestand aus vier Kasetten mit jeweils zwei übereinander angeordneten parallelen Gittern. Die Innenabmessung der Kasetten war 340 mm x 337 mm. Das obere Gitter hatte sieben Magnetstäbe, das untere sechs. Die Magnetsäbe hatten eine Länge von 337 mm und einen Durchmesser von 28 mm. Die magnetische Flussdichte betrug 1,4 T. Der horizontale Abstand zwischen den Magnetstäben betrug 22 mm, der vertikale Abstand zwischen den Magnetsäben betrug 52 mm. Die Magnetstäbe waren so angeordnet, dass die Magnetstäbe des unteren Gitters mittig unter den Spalten des oberen Gitters lagen.

Die Zuleitung zum Magnetabscheider war ein Rohr mit einem Innendurchmesser von 50 mm. Zwischen Zuleitung und dem ersten Gitter des Magnetabscheiders war ein Produktverteiler.

### Beispiel 1 (Vergleichsbeispiel)

Es wurde die Verwendung eines Siebes mit Drähten aus einem Stahl mit der Werkstoffnummer 1.4301 simuliert. Der Stahl enthält 17,5 bis 19,5 Gew.-% Chrom, 8,0 bis 10,5 Gew.-% Nickel, höchstens 0,07 Gew.-% Kohlenstoff und höchstens 0,11 Gew.-% Stickstoff.

Die Testdrähte konnten bis zu einem Durchsatz von 3000 kg/h abgetrennt werden. Bei höheren Durchsätzen verblieben Drähte im Superabsorber.

### Beispiel 2

Es wurde die Verwendung eines Siebes mit Drähten aus einem Stahl mit der Werkstoffnummer 1.4016 simuliert. Der Stahl enthält 16,0 bis 18,0 Gew.-% Chrom und höchstens 0,08 Gew.-% Kohlenstoff.

Die Testdrähte konnten bis zu einem Durchsatz von 12000 kg/h abgetrennt werden. Bei höheren Durchsätzen verblieben Drähte im Superabsorber.

## Patentansprüche

1. Verfahren zur Herstellung von Superabsorberpartikeln durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend die Schritte
i) Klassierung der Superabsorberpartikel mittels eines oder mehrerer Siebe und
ii) Entfernung metallischer Verunreinigungen mittels eines oder mehrerer Magnetabscheider,
wobei Schritt i) vor Schritt ii) durchgeführt wird, **dadurch gekennzeichnet, dass** zur Klassierung Siebe aus einem Drahtgewebe eingesetzt werden, die Drähte des Drahtgewebes aus einem Stahl aus mindestens 70 Gew.-% Eisen, mindestens 10 Gew.-% Chrom und weniger als 2,5 Gew.-% Nickel bestehen und der Durchsatz an Superabsorberpartikeln im Magnetabscheider im Bereich von 2,0 bis 6,5 g/s pro cm² freier Querschnittsfläche beträgt.

2. Verfahren nach Anspruch 1, **dadurch gekennzeichnet, dass** die Drähte des Drahtgewebes aus einem Stahl aus mindestens 75 Gew.-% Eisen, mindestens 12 Gew.-% Chrom und weniger als 1,0 Gew.-% Nickel bestehen.

3. Verfahren nach Anspruch 1 oder 2, **dadurch gekennzeichnet, dass** die Drähte des Drahtgewebes aus einem Stahl aus mindestens 78 Gew.-% Eisen, mindestens 14 Gew.% Chrom und weniger als 0,5 Gew.-% Nickel bestehen.

4. Verfahren nach einem der Ansprüche 1 bis 3, **dadurch gekennzeichnet, dass** die Drähte des Drahtgewebes aus einem Stahl aus mindestens 80 Gew.-% Eisen, mindestens 16 Gew.-% Chrom und weniger als 0,1 Gew.-% Nickel bestehen.

5. Verfahren nach einem der Ansprüche 1 bis 4, **dadurch gekennzeichnet, dass** der Durchsatz an Superabsorberpartikeln im Magnetabscheider beträgt von 2,5 bis 6,0 g/s pro cm² freier Querschnittsfläche.

6. Verfahren nach einem der Ansprüche 1 bis 5, **dadurch gekennzeichnet, dass** der Durchsatz an Superabsorberpartikeln im Magnetabscheider beträgt von 3,0 bis 5,5 g/s pro cm² freier Querschnittsfläche.

7. Verfahren nach einem der Ansprüche 1 bis 6, **dadurch gekennzeichnet, dass** der Durchsatz an Superabsorberpartikeln im Magnetabscheider beträgt von 3,5 bis 5,0 g/s pro cm² freier Querschnittsfläche.

8. Verfahren nach einem der Ansprüche 1 bis 7, **dadurch gekennzeichnet, dass** die Superabsorberpartikel bei der Klassierung und/oder im Magnetabscheider eine Temperatur von 40 bis 90°C aufweisen.

9. Verfahren nach einem der Ansprüche 1 bis 8, **dadurch gekennzeichnet, dass** die Superabsorberpartikel bei der Klassierung und/oder im Magnetabscheider einen Feuchtegehalt von 1 bis 20 Gew.-% aufweisen.

10. Verfahren nach einem der Ansprüche 1 bis 9, **dadurch gekennzeichnet, dass** der Magnetabscheider aus einzelnen Magnetstäben besteht.

11. Verfahren nach Anspruch 10, **dadurch gekennzeichnet, dass** die Magnetstäbe einen Durchmesser von 15 bis 45 mm aufweisen.

12. Verfahren nach Anspruch 10 oder 11, **dadurch gekennzeichnet, dass** die Magnestäbe als parallele Gitter angeordnet sind.

13. Verfahren nach Anspruch 12, **dadurch gekennzeichnet, dass** der horizontale Abstand zwischen den Magnetstäben von 10 bis 35 mm beträgt.

14. Verfahren nach Anspruch 12 oder 13, **dadurch gekennzeichnet, dass** der vertikale Abstand zwischen den Magnetstäben von 30 bis 75 mm beträgt.

15. Verfahren nach einem der Ansprüche 1 bis 14, **dadurch gekennzeichnet**, das der Schritt i) die letzte Klassierung im Verfahren ist.

## Claims

1. A process for producing superabsorbent particles by polymerizing a monomer solution or suspension comprising
a) at least one ethylenically unsaturated monomer which bears acid groups and may have been at least partly neutralized,
b) at least one crosslinker,
c) at least one initiator,
d) optionally one or more ethylenically unsaturated monomers copolymerizable with the monomers mentioned under a) and
e) optionally one or more water-soluble polymers, comprising the steps of
i) classifying the superabsorbent particles by means of one or more sieves and
ii) removing metallic impurities by means of one or more magnetic separators,
where step i) is conducted before step ii), which comprises classifying using sieves made of a wire mesh, wherein the wires of the wire mesh consist of a steel composed of at least 70% by weight of iron, at least 10% by weight of chromium and less than 2.5% by weight of nickel, and the throughput of superabsorbent particles in the magnetic separator is in the range from 2.0 to 6.5 g/s per cm² of free cross-sectional area.

2. The process according to claim 1, wherein the wires of the wire mesh consist of a steel composed of at least 75% by weight of iron, at least 12% by weight of chromium and less than 1.0% by weight of nickel.

3. The process according to claim 1 or 2, wherein the wires of the wire mesh consist of a steel composed of at least 78% by weight of iron, at least 14% by weight of chromium and less than 0.5% by weight of nickel.

4. The process according to any of claims 1 to 3, wherein the wires of the wire mesh consist of a steel composed of at least 80% by weight of iron, at least 16% by weight of chromium and less than 0.1% by weight of nickel.

5. The process according to any of claims 1 to 4, wherein the throughput of superabsorbent particles in the magnetic separator is from 2.5 to 6.0 g/s per cm² of free cross-sectional area.

6. The process according to any of claims 1 to 5, wherein the throughput of superabsorbent particles in the magnetic separator is from 3.0 to 5.5 g/s per cm² of free cross-sectional area.

7. The process according to any of claims 1 to 6, wherein the throughput of superabsorbent particles in the magnetic separator is from 3.5 to 5.0 g/s per cm² of free cross-sectional area.

8. The process according to any of claims 1 to 7, wherein the superabsorbent particles have a temperature of 40 to 90°C in the classification and/or in the magnetic separator.

9. The process according to any of claims 1 to 8, wherein the superabsorbent particles have a moisture content of 1% to 20% by weight in the classification and/or in the magnetic separator.

10. The process according to any of claims 1 to 9, wherein the magnetic separator consists of individual bar magnets.

11. The process according to claim 10, wherein the bar magnets have a diameter of 15 to 45 mm.

12. The process according to claim 10 or 11, wherein the bar magnets are in a parallel grid arrangement.

13. The process according to claim 12, wherein the horizontal distance between the bar magnets is from 10 to 35 mm.

14. The process according to claim 12 or 13, wherein the vertical distance between the bar magnets is from 30 to 75 mm.

15. The process according to any of claims 1 to 14, wherein step i) is the last classification in the process.

## Revendications

1. Procédé pour la préparation de particules de superabsorbant par polymérisation d'une solution ou d'une suspension de monomères, contenant
a) au moins un monomère éthyléniquement insaturé, portant des groupes de types acides, qui peut être au moins partiellement neutralisé,
b) au moins un agent de réticulation,
c) au moins un initiateur,
d) éventuellement un ou plusieurs monomères éthyléniquement insaturés copolymérisables avec les monomères mentionnés en a) et
e) éventuellement un ou plusieurs polymères solubles dans l'eau,
comprenant les étapes de
i) classification des particules de superabsorbant au moyen d'un ou plusieurs tamis et
ii) élimination d'impuretés métalliques au moyen d'un ou plusieurs séparateurs magnétiques,
l'étape i) étant mise en œuvre avant l'étape ii), **caractérisé en ce que** pour la classification, des tamis composés d'une toile métallique sont utilisés, les fils de la toile métallique sont constitués d'un acier composé d'au moins 70 % en poids de fer, d'au moins 10 % en poids de chrome et de moins de 2,5 % en poids de nickel et le débit de particules de superabsorbant dans le séparateur magnétique est dans la plage de 2,0 à 6,5 g/s par cm² de superficie libre.

2. Procédé selon la revendication 1, **caractérisé en ce que** les fils de la toile métallique sont constitués d'un acier composé d'au moins 75 % en poids de fer, d'au moins 12 % en poids de chrome et de moins de 1,0 % en poids de nickel.

3. Procédé selon la revendication 1 ou 2, **caractérisé en ce que** les fils de la toile métallique sont constitués d'un acier composé d'au moins 78 % en poids de fer, d'au moins 14 % en poids de chrome et de moins de 0,5 % en poids de nickel.

4. Procédé selon l'une quelconque des revendications 1 à 3, **caractérisé en ce que** les fils de la toile métallique sont constitués d'un acier composé d'au moins 80 % en poids de fer, d'au moins 16 % en poids de chrome et de moins de 0,1 % en poids de nickel.

5. Procédé selon l'une quelconque des revendications 1 à 4, **caractérisé en ce que** le débit de particules de superabsorbant dans le séparateur magnétique est de 2,5 à 6,0 g/s par cm² de superficie libre.

6. Procédé selon l'une quelconque des revendications 1 à 5, **caractérisé en ce que** le débit de particules de superabsorbant dans le séparateur magnétique est de 3,0 à 5,5 g/s par cm² de superficie libre.

7. Procédé selon l'une quelconque des revendications 1 à 6, **caractérisé en ce que** le débit de particules de superabsorbant dans le séparateur magnétique est de 3,5 à 5,0 g/s par cm² de superficie libre.

8. Procédé selon l'une quelconque des revendications 1 à 7, **caractérisé en ce que** les particules de superabsorbant présentent une température de 40 à 90 °C lors de la classification et/ou dans le séparateur magnétique.

9. Procédé selon l'une quelconque des revendications 1 à 8, **caractérisé en ce que** les particules de superabsorbant présentent une teneur en humidité de 1 à 20 % en poids lors de la classification et/ou dans le séparateur magnétique.

10. Procédé selon l'une quelconque des revendications 1 à 9, **caractérisé en ce que** le séparateur magnétique est constitué de barreaux magnétiques individuels.

11. Procédé selon la revendication 10, **caractérisé en ce que** les barreaux magnétiques présentent un diamètre de 15 à 45 mm.

12. Procédé selon la revendication 10 ou 11, **caractérisé en ce que** les barreaux magnétiques sont ordonnés en tant que grilles parallèles.

13. Procédé selon la revendication 12, **caractérisé en ce que** la distance horizontale entre les barreaux magnétiques est de 10 à 35 mm.

14. Procédé selon la revendication 12 ou 13, **caractérisé en ce que** la distance verticale entre les barreaux magnétiques est de 30 à 75 mm.

15. Procédé selon l'une quelconque des revendications 1 à 14, **caractérisé en ce que** l'étape i) est la dernière classification dans le procédé.
